# EUROPEAN PATENT APPLICATION

(11) **EP 4 672 577 A1**
(43) Date of publication of application: **31.12.2025**
(21) Application number: 24185043.7
(22) Date of filing: 27.06.2024
(51) Int. Cl.: H02M 1/00, H02M 3/00, H02M 3/335, H02M 7/483, H02M 1/42

(54) **MULTI-LEVEL AND MULTI-PHASE CONVERTER AND CONTROL METHOD FOR OPERATING A MULTI-LEVEL AND MULTI-PHASE CONVERTER**

(71) Applicant: Delta Electronics (Thailand) Public Co., Ltd., Samutprakarn 10280 (TH)
(72) Inventor: SOLANKI, Jitendra, 59494 Soest (DE)
(74) Representative: Hoefer & Partner Patentanwälte mbB

(57) **Abstract**

The invention concerns a multi-level multi-phase converter (1), comprising: a transformer (2) with a plurality N of phases (12); a primary side circuit (5) connected to a primary side (3) of the transformer (2), the primary side circuit (5) comprising a plurality of primary switch legs (6) with primary switches (27), wherein a number of primary switch legs (6) of the primary side circuit (5) corresponds to a number N of phases (12) of the transformer (2); and a secondary side circuit (7) connected to a secondary side (4) of the transformer (2), the secondary side circuit (7) comprising a plurality of secondary rectifier legs (8) with secondary rectifier elements (9), wherein the secondary rectifier legs (8) are connected in parallel to one another; wherein each of the primary switch legs (6) comprises a plurality of stacked primary half-bridges (6.1, 6.2) connected in series with one another; the primary switch legs (6) are connected in parallel to one another; and wherein one phase (12) of the primary side (3) of the transformer (2) is connected between two primary half-bridges (6.1, 6.2) in series with one another. The invention also concerns a control method for operating the multi-level multi-phase converter (1).

## Description

The present invention concerns a multi-level and multi-phase converter as well as a control method for operating a multi-level and multi-phase converter.

Commonly, converters for electric power conversion are known from US2022/0109381, US 2019/0052177, US 2021/0408922, and WO 2020/0108460, for example.

For instance, US 2021/0203236 A1 discloses an isolated multilevel DC/DC resonant converter and attempts to achieve a wide output voltage range with a narrow device switching frequency range, relative to an output voltage range and a device switching frequency range. In particular, this document shows a multilevel-topology for DC/DC stage in Fig. 8 thereof. However, the known multilevel-topology thereof is not suitable for high power requirements. Further, due to single-phase configuration large capacitive filters are used at input and output stages of circuit.

Further, for example, US 2021/0408922 A1, particularly Fig. 11c thereof, demonstrates an n-stacked full bridge resonant converter. However, this converter employs a number n full bridge inverter cells each with a transformer, such that the converter employs in total n separated transformers. Thereby, this topology suffers from a high number of components, low efficiency, and a highly complicated control method for operation thereof. Due to a large number of stacked full bridges, this configuration is suitable for only very high-voltage applications and is particularly not suitable, especially not efficiently/economically suitable, for low-voltage applications equal to or below 1kV.

From EP 4 246 787 A1, a multi-level multi-phase converter is known which is configured as a three-phase three-level flying capacitor LLC. This converter, however, has the disadvantage in that a high number of components, particularly capacitors and corresponding capacitor voltage sensing units are required.

In particular, in the commonly employed converters, capacitor voltages of DC link capacitors need to be maintained, which necessitates sensing circuits which sense said capacitor voltages. This further increases the number of components and costs.

It is an object of the present invention to overcome the foregoing described deficiencies. In particular, it is an object of the present invention to provide a multi-level multi-phase converter which can meet high power requirements, while employing a decreased number of components, a reduced filter size, and which can be operated easily and efficiently, particularly for applications at equal to or less than 1 kV. It is also an objective of invention to use low voltage switches in a relatively high voltage application. Furthermore, it is an object of the present invention to provide a control method for operating a multi-level multi-phase converter with the foregoing advantages in a simple manner.

The solution of these objects is achieved by the subject-matter of the independent claims. The dependent claims contain advantageous embodiments of the present invention.

In particular, these objects are solved by a multi-level and multi-phase converter according to claim 1. Therein, the multi-level and multi-phase converter (henceforth also referred to as "converter") comprises a transformer with a plurality N of phases. A primary side circuit of the converter is connected to a primary side of the transformer, wherein the primary side circuit comprises a plurality of primary switch legs with primary switches. Therein, a number of primary switch legs of the primary side circuit corresponds to a number N of phases of the transformer. Further, a secondary side circuit of the converter is connected to a secondary side of the transformer, wherein the secondary side circuit comprises a plurality of secondary rectifier legs with secondary rectifier elements. Therein, the secondary rectifier legs are connected in parallel to one another. In the converter, each of the primary switch legs comprises a plurality of stacked primary half-bridges connected in series with one another. The primary switch legs are connected in parallel to one another. Furthermore, one phase of the primary side of the transformer is connected between two primary half-bridges in series with one another.

Thereby, the multi-level and multi-phase converter of claim 1 achieves a multi-level and multi-phase converter topology. With this topology, the converter of the present invention achieves a high power output while employing a low number of components which can be operated efficiently and which can be easily cooled. In particular, each phase of the primary side of the transformer is connected to exactly one primary switch leg of the converter. Therein, each phase of the primary side of the transformer is connected between two primary half-bridges of that primary switch leg, the two primary half-bridges being connected in series with one another. In particular, with respect to one and each phase of the primary side of the transformer, the primary side of the transformer is not connected between two primary half-bridges of two separate primary switch legs. Instead, each phase of the transformer is connected between only those primary half-bridges, which are in series with another within one primary switch leg.

Preferably, the converter includes exactly two DC link capacitors and corresponding voltage sensing circuits, such that the number of capacitors and corresponding voltage sensing circuits is advantageously reduced. Moreover, the configuration preferably utilizes the two split DC link capacitors as part of a front end PFC (power factor correction) converter, particularly in AC/DC applications.

Furthermore, the multi-phase configuration of converter legs is preferably not a mere paralleling of converter legs, but is achieved via a phase shift (360/n, n=number of phases) of switching signals together with multi-phase transformer interconnection. This thereby results in completely different performance as compared to single-phase converters or parallel operation of single phase converters. Some main advantages of the present multi-phase configuration includes: lower voltage and current ripples at input and output, balanced resonant currents, smaller transformer, and a reduced number of sensors.

In some preferable embodiments, each of the primary switch legs comprises exactly two stacked primary half-bridges connected in series with one another. In other words, one (and each) phase of the primary side of the transformer is connected to a first of the two stacked primary half-bridges and a second of the two primary half-bridges of one primary switch leg. Thereby, a two-level multi-phase converter is achieved which can output high power while being operated in an easy manner and while employing a low number of components.

Preferably, one phase of the primary side of the transformer is connected between a connection point to a first primary half-bridge and a connection point to a second primary half-bridge different from the first primary half-bridge of a single primary switch leg of the primary side circuit, respectively. The connection point to a (one) first primary half-bridge is denoted "first connection point", whereas the connection point to a (one) second (other) primary half-bridge is denoted "second connection point". Preferably therein, one phase of the primary side of the transformer is connected in series between these first and second connection points. Thereby, a multi-level and multi-phase converter is achieved with a high power output and which can be operated in an efficient manner while employing a low number of components.

In preferable embodiments therein, each phase of the primary side of the transformer is connected to first and second connection points of one respective primary switch leg. In other words, each phase of the primary side of the transformer is connected, especially in series, between a first connection point in a first primary half-bridge and a second connection point in a second primary half-bridge different from the first primary half-bridge on the same primary switch leg of the primary side circuit, the two primary half-bridges being connected in series with one another.

Preferably, each primary half-bridge of each primary switch leg comprises two primary switches. Preferably, the respective connection point of each primary half-bridge is between the two primary switches of that primary half-bridge. Preferably, each of the primary half-bridges thus comprises a high-side primary switch and a low-side primary switch. In other words, each primary switch leg comprises four switches, namely one high-side primary switch and one low-side primary switch of the first primary half-bridge and one high-side primary switch and one low-side switch of the second primary half-bridge, the two primary half-bridges being connected in series with one another.

Preferably, in some embodiments, the secondary side circuit is connected to a star-connected secondary winding of the transformer. In other words, the secondary winding of the transformer is preferably in a star-connection.

Preferably, in further embodiments, the secondary side circuit is connected to a delta-connected secondary winding of the transformer. In other words, the secondary winding of the transformer is preferably in a delta-connection.

Preferably, the secondary side circuit comprises secondary resonant capacitors, which are in delta-connection to the secondary side of the transformer.

Preferably, each of the secondary rectifier legs comprises a plurality of stacked secondary half-bridges connected in series with one another. Thereby, the converter comprises a multi-level secondary side circuit.

Preferably, each of the secondary rectifier legs comprises exactly two stacked secondary half-bridges connected in series with one another. Preferably, the number of secondary half-bridges is equal to the number of primary half-bridges. However, in some embodiments, the number of stacked secondary half-bridges and the number of stacked primary half-bridges is not equal to one another. For example, the number of stacked primary half-bridges may be two, whereas the number of stacked secondary half-bridges is three or more ore four or more.

Preferably, the secondary side of the transformer is connected, especially in series, between a connection point to a first secondary half-bridge and a connection point to a second secondary half-bridge different from the first secondary half-bridge. The connection point to a (one) first secondary half-bridge is denoted "third connection point", whereas the connection point to a (one) second (other) half-bridge is denoted "fourth connection point". In particular, the secondary side of the transformer, with respect to each phase thereof, is connected between two separate stacked secondary half bridges of one secondary rectifier leg.

Preferably, each phase of the secondary side of the transformer is connected between said connection points to the first secondary half bridge and to the second secondary half bridge of a single secondary rectifier leg of the secondary side circuit. In other words, each phase of the secondary side of the transformer is connected to exactly one secondary rectifier leg, at respectively two of the secondary half-bridges thereof. In yet other words, each phase of the secondary side of the transformer is not connected between two half-bridges of separate (i.e. two separate) secondary rectifier legs of the secondary side circuit.

Preferably, the multi-phase converter is unidirectional and the rectifier elements are diodes.

In other preferable embodiments, the multi-phase converter is bidirectional and the rectifier elements are switches.

Preferably, and especially in the bidirectional case, the secondary side circuit comprises a flying capacitor connected between middle-points of different stacked secondary half-bridges. In particular, the secondary side circuit comprises one flying capacitor for each secondary rectifier leg.

For example, in the case of a three-phase transformer, the secondary side circuit comprises three flying capacitors, each of which is connected between middle-points of different stacked secondary half-bridges on one secondary rectifier leg.

Preferably, each flying capacitor is connected between a first middle-point between two secondary switches of a first secondary half-bridge and a second middle-point between two secondary switches of a second secondary half-bridge different from the first secondary half-bridge.

Preferably, the multi-phase converter is a resonant LLC converter.

Further preferably, the number n of phases is equal to three or more, especially six or more. In other words, the multi-phase converter is preferably a three-phase converter or a six-phase converter.

The present invention also concerns a control method for operating the multi-phase converter according to anyone of the foregoing described preferable configurations.

The control method comprises the following steps. In a first step, voltage and current output by the multi-phase converter during operation is determined. In a second step, a load requirement value of voltage and/or current required by a load connected to the multi-phase converter is determined. In a third step, a required frequency value fₒₚ based on the load requirement is calculated. In a fourth step, a maximum frequency value fₘₐₓ of the multi-phase converter is determined. The maximum frequency value fₘₐₓ may be a predetermined or pre-calculated value, and determining said value can encompass reception of such. In a fifth step, the required frequency value fₒₚ is compared with the maximum frequency value fₘₐₓ. Then, if fₒₚ is equal to or less than fₘₐₓ, a frequency-modulation-mode is carried out with switching pulses of primary switches between different primary switch legs being shifted by 360°/N in a sixth step. On the other hand, if fₒₚ is greater than fₘₐₓ, a phase-modulation-mode is carried out with switching pulses of high-side switches and low-side switches of different stacked primary half-bridges connected in series with one another being phase shifted in a seventh step.

In other words, in the phase-modulation-mode, the switching pulses of high-side switches and low-side switches of different stacked primary half-bridges of one (and each) primary switch leg of the primary side circuit of the multi-phase converter are controlled with a phase shift with respect to one another.

Preferably, the control method further comprises an eighth step during frequency-modulation-mode and/or during phase-modulation-mode. Therein, a voltage of at least one out of preferably two input side capacitors of the primary side circuit of the converter is sensed. If at least one of the sensed voltages is not equal to half of a total input voltage, an additional secondary phase shift is introduced in this eighth step between switching pulses of high-side switches and low-side switches of different primary half-bridges connected in series with one another.

Preferably, during the seventh and/or eighth step(s), a phase shift of 360°/N between generated voltages of different primary switch legs is maintained.

Preferably, the converter comprises one input side capacitor per primary half-bridge of all phases of the primary side of the transformer. For example, if the transformer preferably includes three phases, in total six primary half-bridges, i.e. three top half-bridges and three bottom half-bridges stacked on top of another, the converter preferably includes two input side capacitors.

Preferably, in addition or alternatively to comparing the sensed voltage of each of the input side capacitors with half of the total input voltage, the sensed voltages of the preferable multiple of input side capacitors are compared with one another (for example, whether the voltage of one of the input side capacitors is equal to the voltage of another of the input side capacitors). If not, then the aforementioned additional secondary phase shift is introduced.

Preferably, the eighth step is carried out repeatedly or continuously until the sensed voltages of the input side capacitors equal each other and/or half the input voltage.

The foregoing described preferable embodiments and configurations may be combined. In particular, embodiments and features described with respect to the primary side may suitably be combined with embodiments and features described with respect to the secondary side and vice versa. Furthermore, instances in which features with respect to the primary side are described in conjunction with a unidirectional embodiment of the secondary side, such primary side features are also understood as being combinable with a bidirectional embodiment of the secondary side, and vice versa.

The converter of the present invention, especially of the embodiments described above and with regard to the figures, can include lower voltage semiconductor devices for switches which have better FOM (figure or merit). Specifically, 650V GaN switches can be used which lead to reduced switching losses and therefore make it possible to drive the converter with higher frequency. Higher frequency converters also have smaller size, especially with regard to magnetic and capacitance components. High frequency design also helps to utilize planar magnetics, thus further allowing reduction in size.

The multi-phase configuration further leads to significantly lower dc current ripple, therefore, smaller filters may be employed. Due to this dc link current ripple reduction, the converter is more suitable for extended under-resonance operation. Under-resonance operation leads to significantly lower losses as compared to over-resonance operation. The multi-phase transformer has smaller size as compared to equivalent single-phase transformers.

The stacked converter configuration also has the advantage of lower part count and simple control over other multi-level topologies. Particularly, the primary side of unidirectional 3-phase stacked converter can be constructed using two 6-switch modules in some embodiments. Further, only two dc link capacitors banks and sensor circuits are used whereas other topologies require three or more of the same.

The voltage and power level of 3-phase converter is controlled by frequency modulation. With the multi-level converter it is also possible to change the voltage by phase modulation. Therefore, with the help of the present multilevel converter it is possible to optimize the operation (efficiency) of the converter by combining both of the above modulation methods.

Therefore, combining multi-level and multi-phase technology along with stacked converter based topology leads to significantly better performance of the converter. Further, the converter can be easily manufactured and assembled, thereby allowing for automated, especially fully automated, manufacturing.

Further details, advantages, and features of the preferred embodiments of the present invention are described in detail with reference to the figures. Therein:

### Brief Description of the Drawings

Fig. 1 shows a schematic circuit diagram of a converter according to a first embodiment of the present invention;
Fig. 2 shows a schematic circuit diagram of a converter according to a second embodiment of the present invention;
Fig. 3 shows a schematic circuit diagram of a converter according to a third embodiment of the present invention;
Fig. 4 shows a schematic circuit diagram of a converter according to a fourth embodiment of the present invention;
Fig. 5 shows a schematic circuit diagram of a converter according to a fifth embodiment of the present invention;
Fig. 6 shows a schematic circuit diagram of a converter according to a sixth embodiment of the present invention;
Fig. 7 shows a schematic circuit diagram of a converter according to a seventh embodiment of the present invention;
Fig. 8 shows a schematic circuit diagram of a converter according to a eights embodiment of the present invention;
Fig. 9 shows a schematic circuit diagram of a converter according to a ninth embodiment of the present invention;
Fig. 10 shows a schematic circuit diagram of a converter according to a tenth embodiment of the present invention;
Fig. 11 shows a block diagram for controlling the converter according to a control method of the present invention;
Fig. 12 shows a switching diagram for controlling the converter according to the control method of the present invention; and
Fig. 13 shows a switching diagram for controlling the converter according to the control method of the present invention.

### Description of the Embodiments

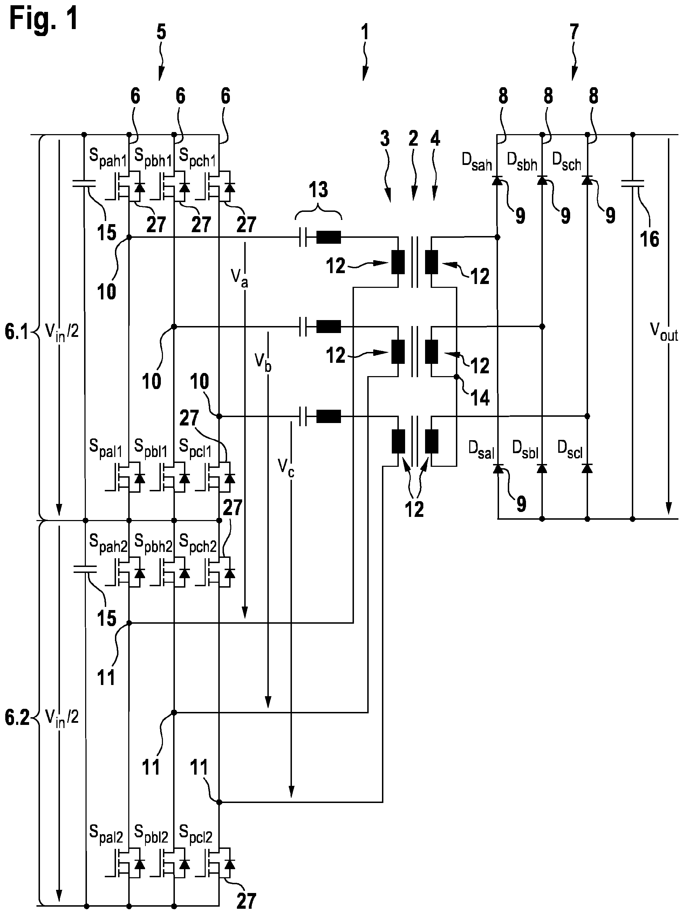

A first embodiment of the present invention will be described with reference to Fig. 1, which shows a schematic circuit diagram of a converter 1 according to the first embodiment of the present invention. More precisely, Fig. 1 shows a multi-level and multi-phase converter 1 according to the first embodiment, which will in the following be referred to "converter".

The converter 1 comprises a transformer 2 with a primary side 3 and a secondary side 4. The transformer 2 generally has a number N of phases. In the present embodiment, N is equal to three (three-phase transformer 2).

However, as will be demonstrated below, N is not particularly restricted to exactly three, and may instead be three or more, and in preferable embodiments is six.

The converter 1 further comprises a primary side circuit 5 connected to the primary side 3 of the transformer 2. The primary side circuit 5 comprises a plurality of primary switch legs 6, each with primary switches 27. A number of primary switch legs 6 corresponds to the number of phases of the transformer 2. In the present embodiment, the primary side circuit 5 comprises three primary switch legs 6.

Furthermore, the converter 1 comprises a secondary side circuit 7 connected to the secondary side 4 of the transformer 2. The secondary side circuit 7 comprises a plurality of secondary rectifier legs 8, each with secondary rectifier elements 9. The secondary rectifier legs 8 are connected in parallel to one another. Preferably, a number of secondary rectifier legs 8 corresponds to the number N of phases of the transformer 2, in the present embodiment particularly three secondary rectifier legs 8. In the present embodiment, each secondary rectifier leg 8 comprises two secondary rectifier elements 9 in series with one another.

In the present embodiment, the secondary rectifier elements 9 are diodes, such that the converter 1, as will be discussed further below, is unidirectional.

As can be taken from Fig. 1, each of the primary switch legs 6 comprises a plurality of stacked primary half-bridges 6.1, 6.2 connected in series with another. In this regard, "connected in series with another" refers especially to being connected in series with respect to an input voltage Vin, demonstrated by voltage drop Vin/x being at each primary half-bridge 6.1, 6.2, with "x" being the number of half-bridges 6.1, 6.2.

In the present preferable embodiment, the converter 1 comprises two stacked primary half-bridges 6.1, 6.2 such that the voltage drop across each half-bridge 6.1, 6.2 is Vin/2 (foregoing "x" is two).

Herein, the primary switch legs 6 are connected in parallel to one another while one phase 12 of the primary side 3 of the transformer 2 is connected between two primary half-bridges 6.1, 6.2 in series with one another.

In the present embodiment, each of the primary switch legs 6 comprises exactly two stacked primary half-bridges 6.1, 6.2 connected in series with one another, such that in total there are six stacked primary half-bridges 6.1, 6.2 being pair-wise (three pairs of two) in series with one another. Further, each of the half-bridges 6.1, 6.2 comprises two switches 27 in series with one another.

Herein, one phase 12 of the primary side 13 of the transformer 2 is connected in series between a first connection point 10 and a second connection point 11. The first connection point 10 is on the first primary half-bridge 6.1, whereas the second connection point 11 is on the second primary half-bridge 6.2. As can be taken from Fig. 1, this is the case for all three phases 12 of the primary side 3 of the transformer 2 and the primary side circuit 5.

In particular, the phases 12 of the primary side 3 of the transformer 2 (respectively) are not connected between a single half-bridge 6.1 or 6.2, but are connected between two different half-bridges 6.1, 6.2. Further, each of the phases 12 of the primary side 3 of the transformer 2 is connected between two different half-bridges 6.1, 6.2 of exactly one primary switch leg 6. The half-bridges 6.1, 6.2, between which each phase 12 is connected, are thus separate half-bridges 6.1, 6.2 of a single primary switch leg 6.

Furthermore, as shown in Fig. 1, the secondary side 4 of the transformer 2 is in star connection with respect to a star point 14. Each phase 12 on the secondary side 4 of the transformer 2 is connected to the star point 14, especially directly connected to the star point 14.

The converter 1 also comprises input capacitors 15 and an output capacitor 16.

Furthermore, in Fig. 1, voltages Va, Vb, Vc are shown for demonstrating voltage of each phase 12 of the primary side 3 of the transformer 2.

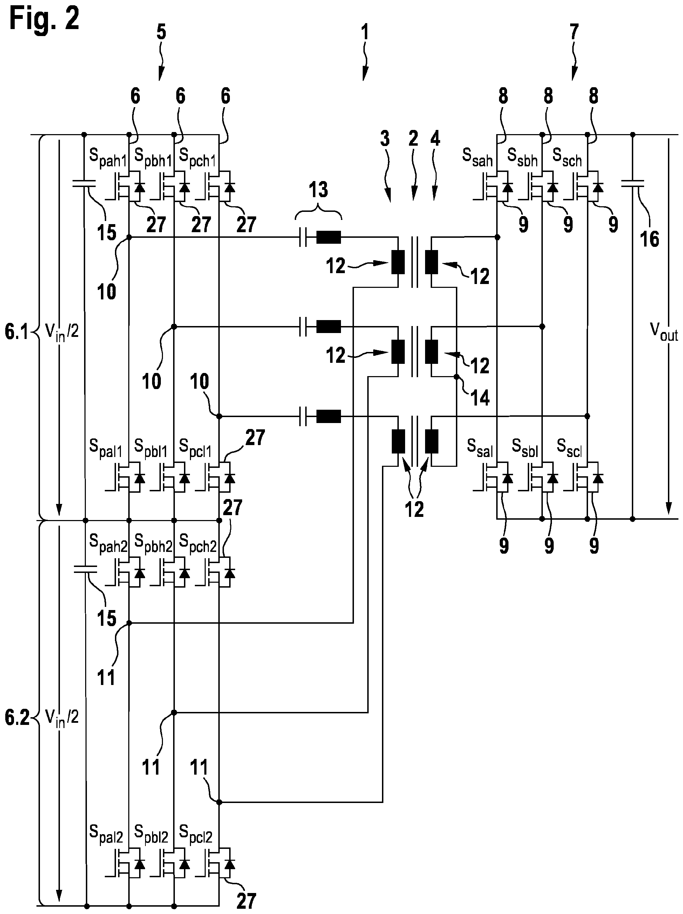

For later reference with regard to switching operations, the switches 27 are each denoted with "Sijkx", with "S" denoting "S" for switch or "D" for diode (see secondary side circuit 7), "i" denoting "p" for primary, "s" for secondary (see below, for instance Fig. 2), "j" denoting "a", "b", "c" for different primary switch legs 6, "k" denoting "h" for high-side or "I" for low-side, and "x" denoting number of primary half-bridge 6.1, 6.2, which in the present embodiment is 1 or 2.

The present embodiment particularly shows an LLC converter 1, especially by comprising a resonant tank 13 of capacitance (C) and inductance (L).

The converter 1 of the present embodiment achieves a multi-level topology via the half-bridges 6.1, 6.2. Thereby, the primary switches 27 can be switches which are capable of operating at high frequencies, which allows for a reduction in size of magnetic components and capacitors of the converter 1. For example, the primary switches 27 can be GaN switches with a wide bandgap, which typically have a 650V blocking voltage rating but can operate at high frequencies, while the entire converter 1 can be rated higher, for example for 800V. Simultaneously, the converter 1 can meet high power requirements for DC to DC power conversion via the multi-phase multi-level configuration of stacked half-bridges 6.1, 6.2. Thus, high power requirements are achieved with a small size of the converter 1 while costs are reduced.

A second embodiment of the present invention will be described with reference to Fig. 2, which shows a schematic circuit diagram of a converter 1 according to the second embodiment of the present invention.

In particular, as can be taken from Fig. 2, the converter 1 of the present embodiment comprises, as secondary rectifier elements 9, switches 9.

Thereby, the converter 1 of the present embodiment can be employed for bidirectional conversion. The converter 1 of the present embodiment also can reduce secondary side conduction losses and can be advantageously employed in low voltage high current applications.

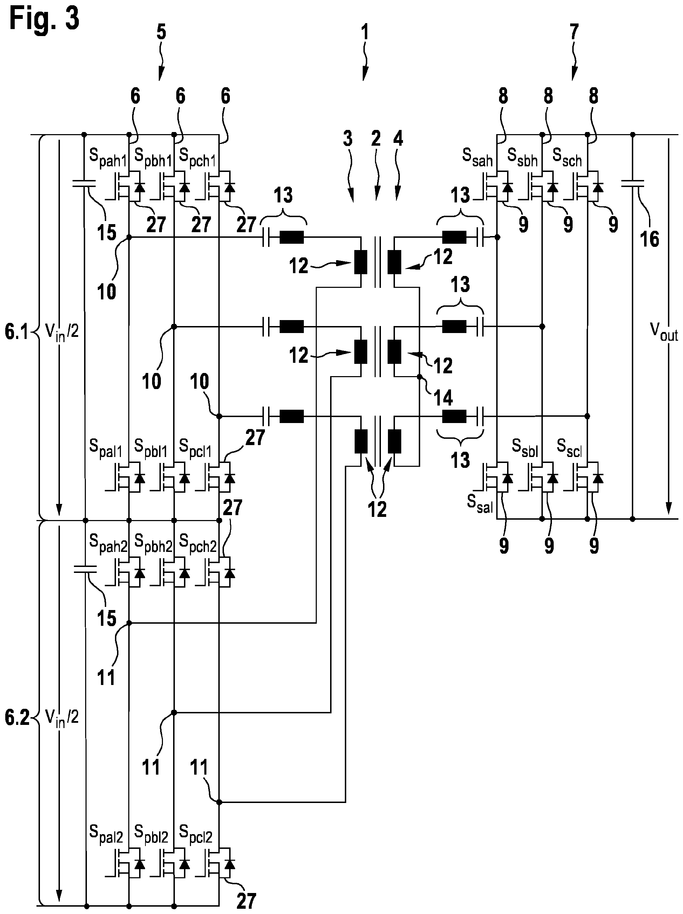

A third embodiment of the present invention will be described with reference to Fig. 3, which shows a schematic circuit diagram of a converter 1 according to a third embodiment of the present invention.

Herein, the secondary side 4 of the transformer 2 is connected to an additional resonant tank 13 on the secondary side. Thereby, the converter 1 advantageously provides a bidirectional LLC resonant converter 1 with the foregoing described advantages.

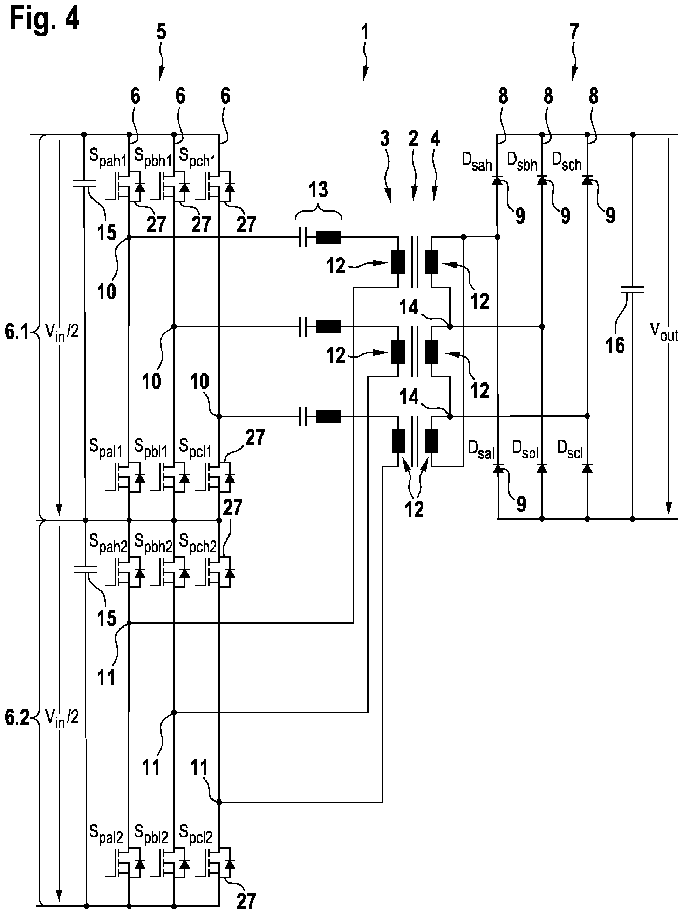

A fourth embodiment of the present invention will be described with reference to Fig. 4, which shows a schematic circuit diagram of a converter 1 according to the fourth embodiment of the present invention.

In the present embodiment, phases 12 on the secondary side 4 of the transformer 2 are connected in a delta configuration. Thereby, flow of triplen-harmonics is prevented in the converter 1. Also, current through transformer 2 windings on secondary side 4 reduces by a factor of 1/^3 in the present exemplary case of three phases.

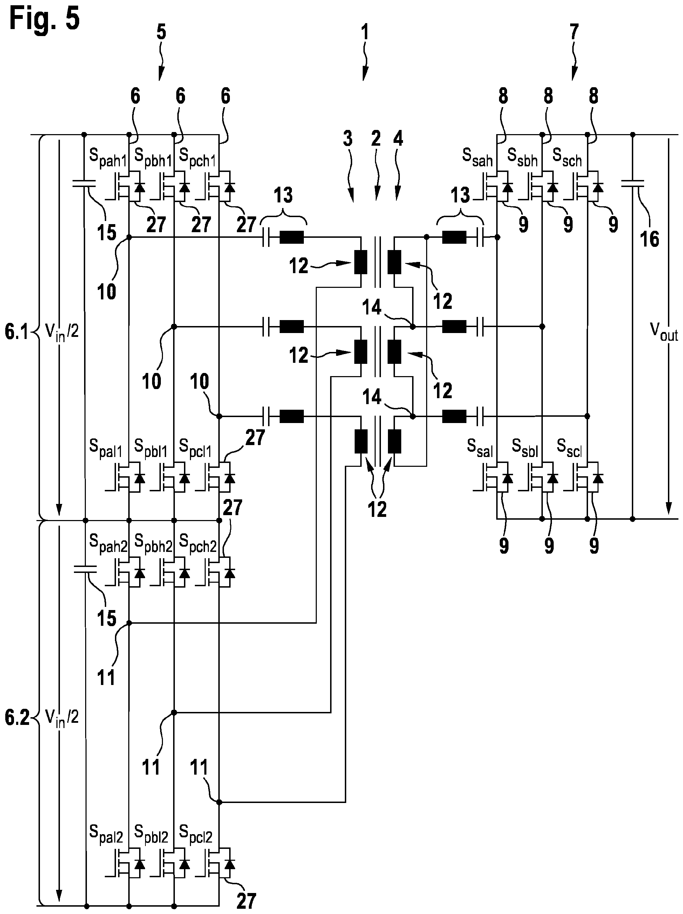

A fifth embodiment of the present invention will be described with reference to Fig. 5, which shows a schematic circuit diagram of a converter 1 according to the fifth embodiment of the present invention.

Herein, the delta configuration is combined with the secondary rectifier elements 9 being switches 9. Thereby, the foregoing described advantages are combined with bidirectional conversion.

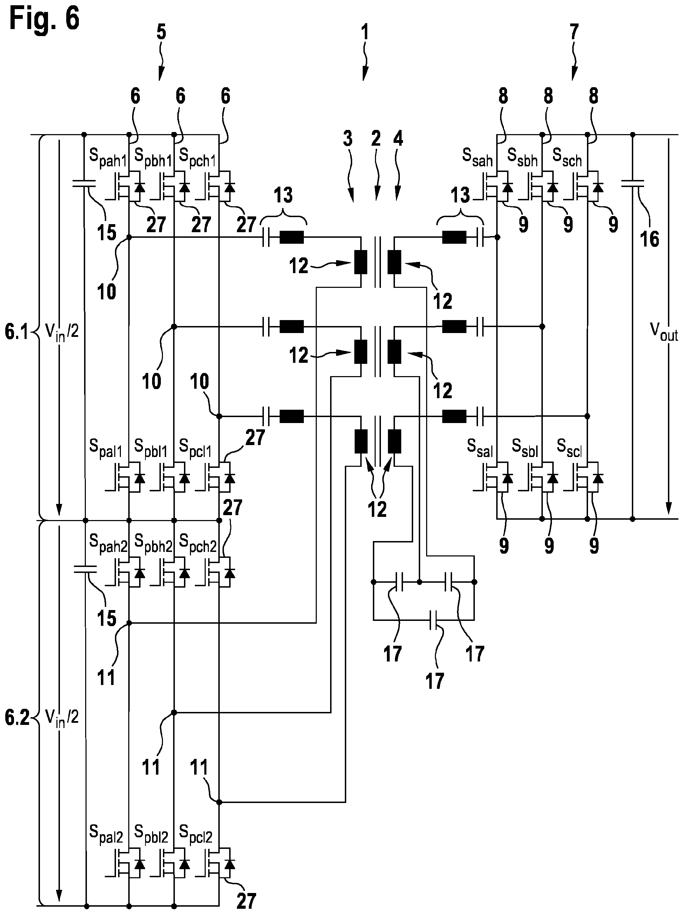

A sixth embodiment of the present invention will be described with reference to Fig. 6, which shows a schematic circuit diagram of a converter 1 according to the sixth embodiment of the present invention.

In the present embodiment, the converter 1 comprises secondary resonant capacitors 17, especially three such capacitors 17, in delta connection to the secondary side 4 of the transformer 2. Thereby, current through the capacitors 17 is reduced by a factor of 1/√3 as compared to a series connection of a resonant tank 13 (see for example Fig. 3).

Such a delta connection of resonant capacitors 17 can preferably also be provided for the primary side 3 of the transformer 2.

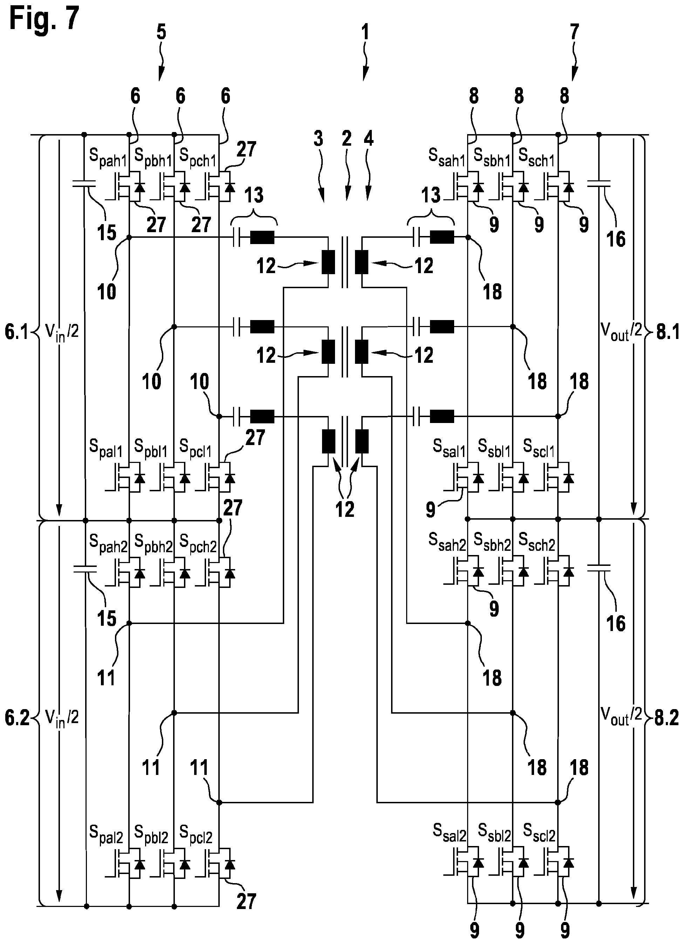

A seventh embodiment of the present invention will be described with reference to Fig. 7, which shows a schematic circuit diagram of a converter 1 according to the seventh embodiment of the present invention.

In the present embodiment, the secondary side circuit 7 is configured in a multi-level configuration similar to the primary side circuit 5 and will be explained below.

Each of the secondary rectifier legs 8 comprises a plurality of stacked secondary half-bridges 8.1, 8.2 connected in series with one another.

In this embodiment, each of the secondary rectifier legs 8 comprises exactly two stacked secondary half-bridges 8.1, 8.2, namely a first secondary half-bridge 8.1 and a second secondary half-bridge 8.2., connected in series with one another.

In particularly this example, the number of secondary half-bridges 8.1, 8.2 is equal to the number of primary half-bridges 6.1, 6.2.

Preferably, the secondary side 4 of the transformer 2 is connected in series between a third connection point 18 at the first secondary half-bridge 8.1 and a fourth connection point 19 at the second secondary half-bridge 8.2 different from the first secondary half-bridge 8.1.

Herein, each phase 12 of the secondary side 4 of the transformer 2 is connected between said third and fourth connection points 18, 19 to the secondary half bridge 8.1, 8.2 of a single secondary rectifier leg 8 of the secondary side circuit 7. In other words, each phase 12 of the secondary side 4 of the transformer 2 is not connected between two half-bridges 8.1, 8.2 of separate (i.e. two separate) secondary rectifier legs 8 of the secondary side circuit 7.

In this embodiment, low voltage secondary switches such as GaN switches can be used as both primary and secondary side switches 27, 9 in a high voltage application (roughly 800V and above) in primary and secondary sides and the foregoing described advantages are especially achieved for bidirectional conversion.

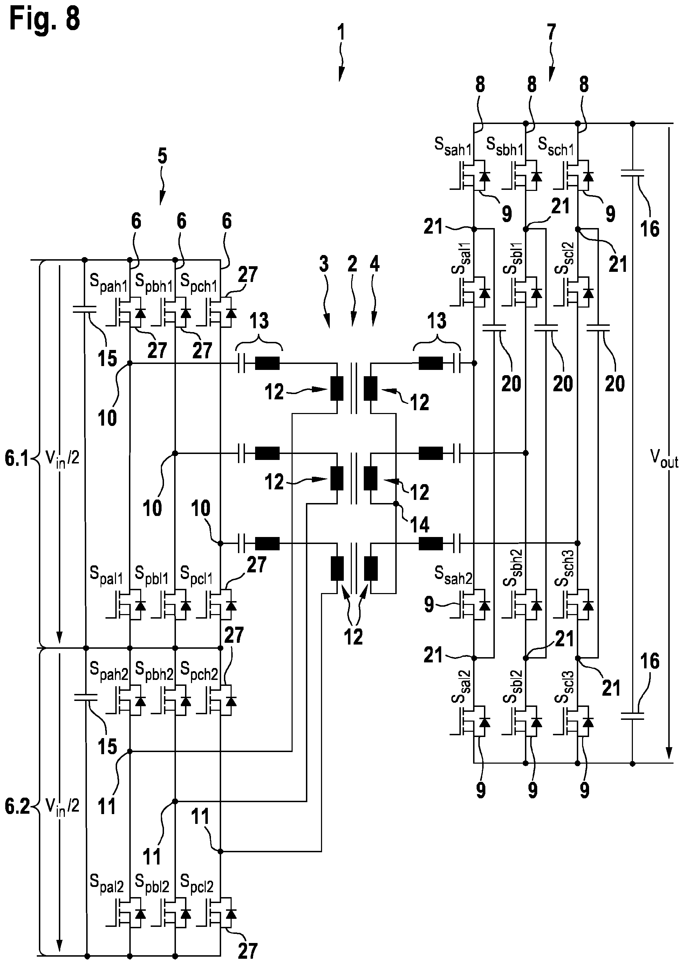

An eighth embodiment of the present invention will be described with reference to Fig. 8, which shows a schematic circuit diagram of a converter 1 according to the eighth embodiment of the present invention.

Herein, the secondary side circuit 7 comprises flying capacitors 20, in particular one flying capacitor 20 for each secondary rectifier leg 8. Each flying capacitor 20 is connected between middle-points 21 of different stacked secondary half-bridges 8.1, 8.2 in one secondary rectifier leg 8. In particular, the flying capacitors 20 each connect the middle-points 21 between the two switches 9 of each secondary half-bridge 8.1, 8.2 together, as shown in Fig. 8.

The present embodiment has the advantage in that neutral is present on the secondary side 4. Therefore, currents flowing through resonant circuits are automatically balanced within the tolerance of the circuit components.

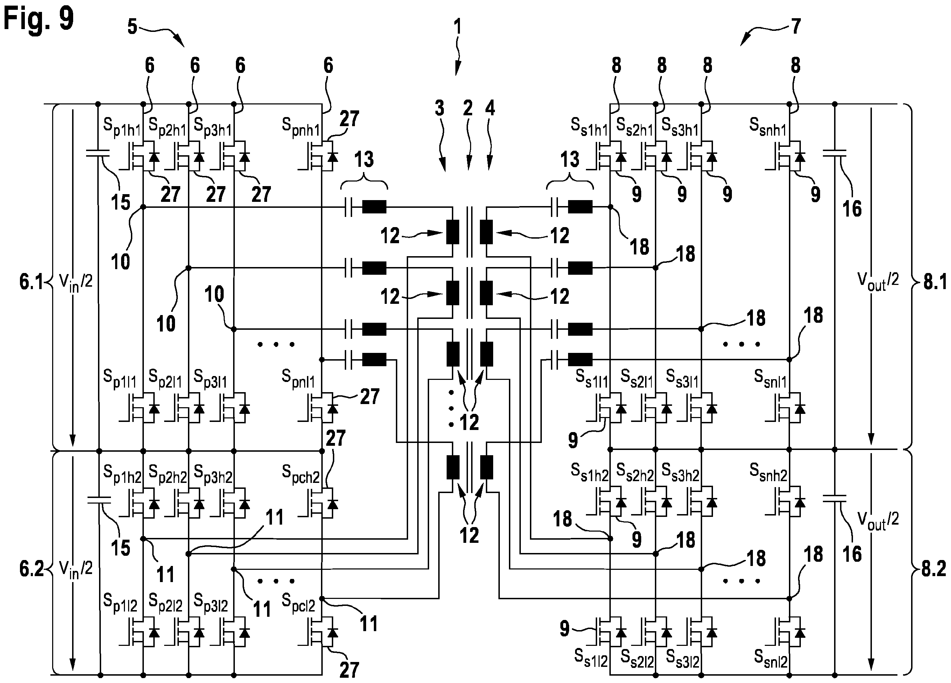

A ninth embodiment of the present invention will be described with reference to Fig. 9, which shows a schematic circuit diagram of a converter 1 according to the ninth embodiment of the present invention.

As demonstrated in Fig. 9, the foregoing described embodiments may suitably be adapted to a multi-phase converter 1 comprising more than the foregoing described three phases. In Fig. 9, four phases are shown. However, as demonstrated therein, the converter 1 can be expanded to five or more or six or more phases by adapting the number of primary switch legs 6 and the number of secondary switch legs 8. In particular, this can be combined with the foregoing described embodiments of the three-phase converter 1, especially for example unidirectional configurations and bidirectional configurations as well as delta or star connections and flying capacitors, etc.

Thereby, the converter 1 as a multi-level and multi-phase converter 1 can be suitably and easily adapted to higher power applications while retaining a low number of components and reducing or limiting its size by allowing for higher switching frequencies.

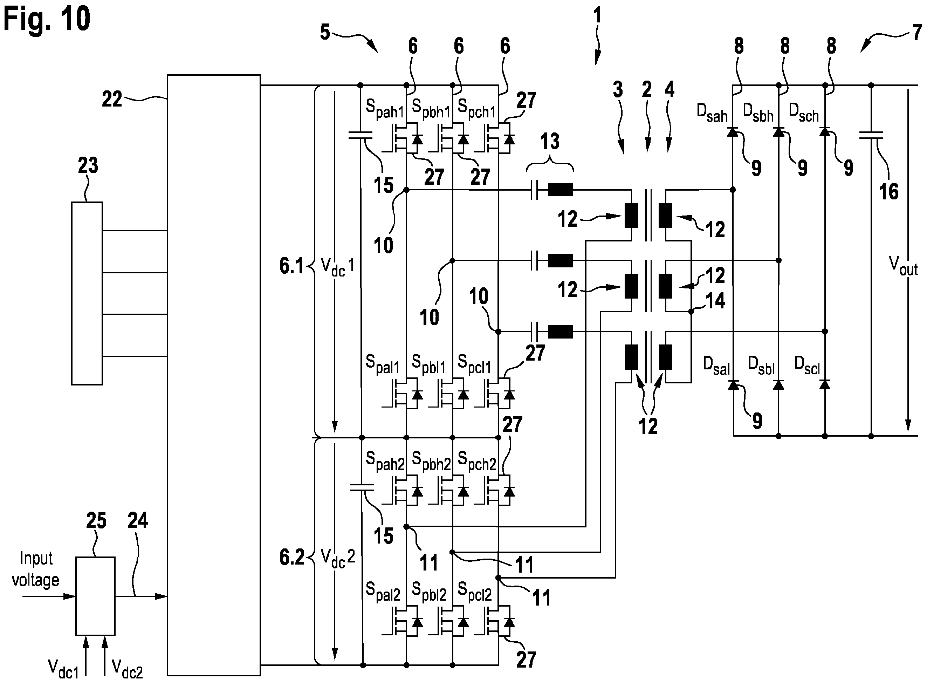

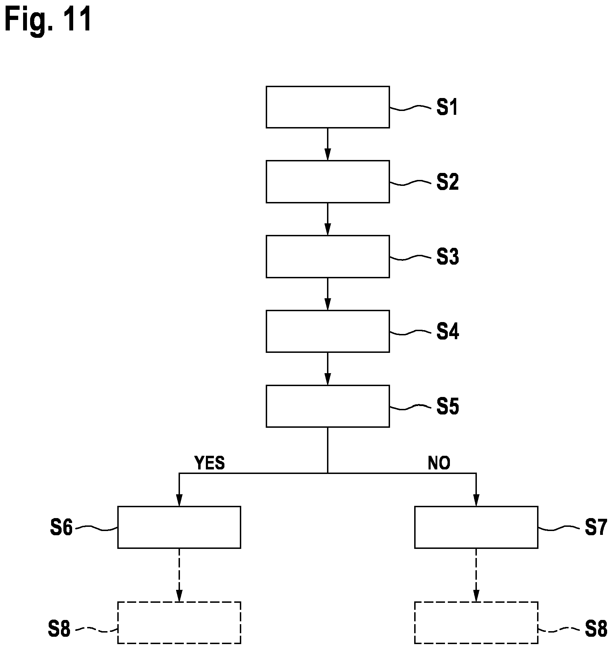

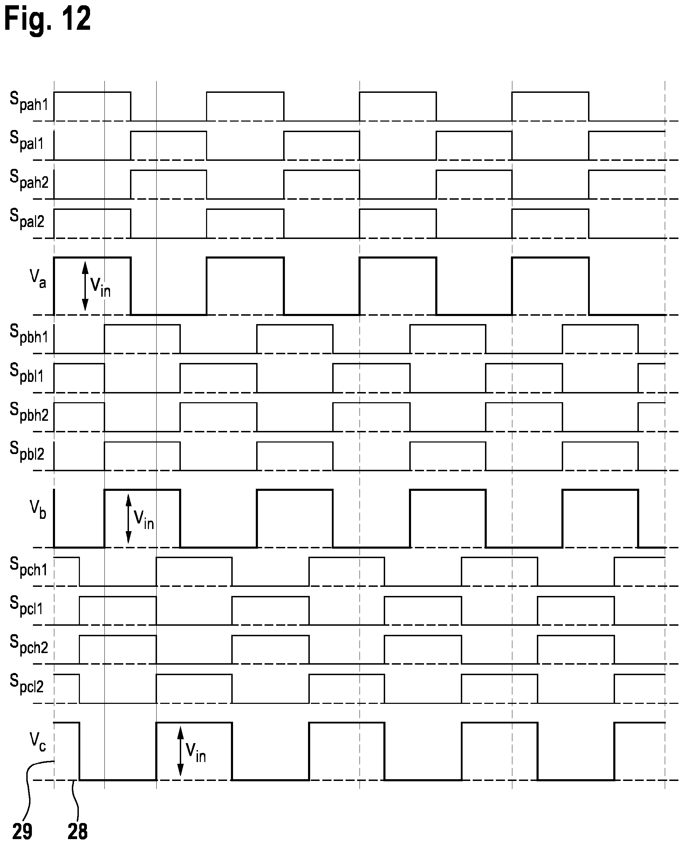

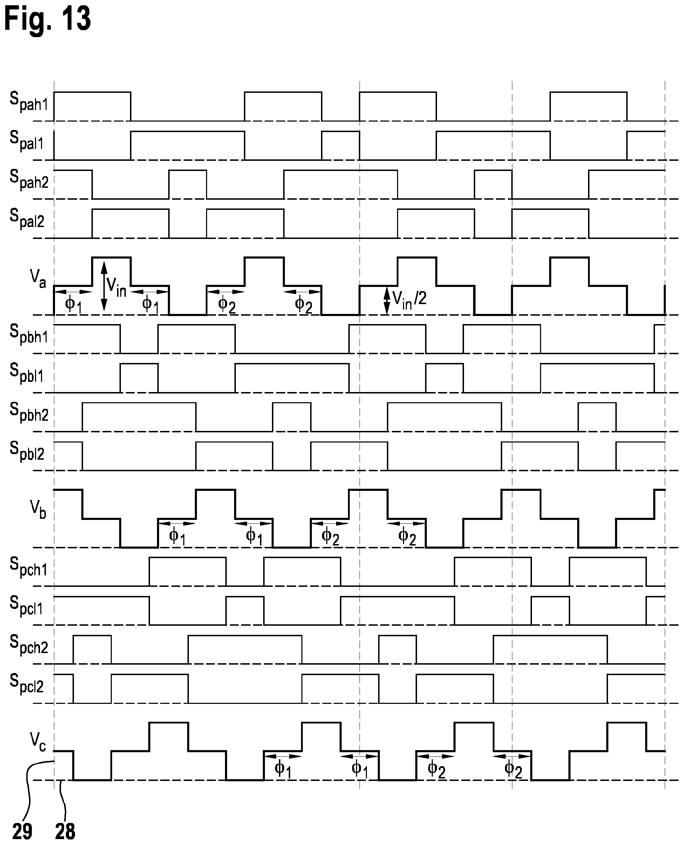

Now, with regard to Figs. 10 to 13, a control device and control method for operating the converter 1 will be explained. Therein, Fig. 10 shows a schematic circuit diagram of a converter 1 according to a tenth embodiment of the present invention, Fig. 11 a block diagram for controlling the converter 1 according to a control method of the present invention, Fig. 12 shows a switching diagram for controlling the converter 1 according to a control method of the present invention, and Fig. 13 shows a switching diagram for controlling the converter 1 according to the control method of the present invention.

As shown in Fig. 10, the converter 1 further comprises a control device, which in the present embodiment is a power factor correction ("PFC") module 22 and a PFC control module 25. The PFC module 22 is connected to an AC grid 23. The PFC control module 25 receives or measures voltage drop values across the primary half-bridges 6.1, 6.2 as well as the input voltage Vin and outputs switching signals 24 to the PFC module 22. Although not shown, the DC link input capacitors 15 may be integrated in the PFC module 22.

Now, with reference to Fig. 11, an embodiment of a control method for controlling the converter 1 according to the present invention will be described. The control method can be applied to any and all of the foregoing described embodiments of the converter 1.

In a first step S1, voltage and current output by the multi-phase converter 1 during operation is determined. This determination especially encompasses measuring the current output or receiving the value from a separate entity (for example, an additional controller or from a load).

In a second step S2, a load requirement value of voltage and/or current required by a load connected to the multi-phase converter 1 is determined. This determination especially encompasses also the load sending such requirement value as a signal and reception thereof.

In a third step S3, a required frequency value fₒₚ based on the load requirement is calculated. The required frequency value fₒₚ is especially calculated based on proportional and or integral controller between frequency and output voltage, current or power.

In a fourth step S4, a maximum frequency value fₘₐₓ of the multi-phase converter 1 is determined. This especially corresponds to a frequency which can be maximally supplied or driven by switches 27, 9 of the converter 1 in a destruction-free manner (especially longer-term destruction-free, for example over a typical lifespan of the converter 1, especially at least a year of operation) and especially within efficiency thresholds. In particular, the maximum frequency value fmax is a predetermined value, particularly received in the fourth step S4 as determination.

In a fifth step S5, the required frequency value fₒₚ is compared with the maximum frequency value fₘₐₓ.

In particular, in the fifth step S5, it is determined whether the required frequency value fₒₚ is equal or less than the maximum frequency value fₘₐₓ.

Then, if fₒₚ is equal to or less than fₘₐₓ (YES), a frequency-modulation-mode is carried out in a sixth step S6 with switching pulses of primary switches 27 between different primary switch legs 6 being shifted by 360°/N.

On the other hand, if fₒₚ is greater than fₘₐₓ (NO), a phase-modulation-mode is carried out in a seventh step S7 with switching pulses of high-side switches ("Spah1", "Spah2", "Spbh1", etc.) and low-side switches ("Spal1", "Spal2", "Spbl1", etc.) 27 of different stacked primary half-bridges 6.1, 6.2 connected in series with one another being phase shifted.

In other words, in the phase-modulation-mode, the switching pulses of high-side switches 27 and low-side switches 27 of different stacked primary half-bridges 6.1, 6.2 of one (and each) primary switch leg 6 of the primary side circuit 5 of the multi-phase converter 1 are controlled with a phase shift with respect to one another.

As a separate preferable eighth step S8, in both cases of frequency-modulation and phase-modulation S6 and S7, voltages of input side capacitors 15 are sensed and checked to be respectively equal to half of the total input side voltage Vin. If this is not true, an (additional) secondary phase shift is introduced between top and bottom half bridges 6.1, 6.2.

As an example of step S8, if it is determined that V_{dc1} (see Fig. 10 for example) is not equal to V_{dc2}, i.e. one or both does not equal half the input voltage Vin, then a secondary phase shift is introduced. To illustrate: For one phase, at the primary switch leg 6 including switches Spah1, Spal1 (top half-bridge 6.1), Spah2, and Spal2 (bottom half-bridge 6.2), a secondary phase-shift is introduced between turning ON of for example Spah1 and Spal2, instead of turning both of these ON simultaneously. In other words, high and low side of the primary switch leg 6 is lagged between the two half-bridges 6.1, 6.2 so as to correct the input capacitor 15 voltages to half of the total input voltage Vin.

Preferably, step S8 is carried out with a proportional and integral controller (so-called "PI controller"), which is preferably included in a control unit of the converter.

Preferably, step S8 is carried out repeatedly or continuously until V_{dc1} is equal to V_{dc2}. In particular, the additional secondary phase-shift is preferably proportional to a difference between V_{dc1} and V_{dc2} or between either of these and Vin/2, and is thus preferably reduced over time and/or switching cycles as these voltages converge to one another or Vin/2, correspondingly.

In Figs. 12 and 13, switching diagrams corresponding to the foregoing method steps S6 and S7 are shown. In particular, in each of Figs. 12 and 13, an abscissa 28 is time and an ordinate 29 is level between 0 and 1 (or between low and high). Furthermore, standardized voltage levels, for example Vᵢₙ, Vₐ, V_{b}, V_{c} (see Fig. 1) are also plotted for reference. The respective switches ("Spal1", etc.), as described above, are also denoted in the foregoing described figures for reference.

In particular, Fig. 12 demonstrates a switching method for carrying out frequency modulation mode of step S6 for a multi-level multi-phase converter. It is explicitly referred to the shown switching scheme.

Further, Fig. 13 demonstrates a switching method for carrying out phase modulation mode of step S7 for a multi-level multi-phase converter. It is explicitly referred to the shown switching scheme.

Preferably, the converter 1 comprises a control unit (not shown) configured to carry out any one or all of the foregoing described control methods and control method steps.

In addition to the foregoing written explanations, it is explicitly referred to figures 1 to 13, wherein the figures in detail show circuit diagrams and configurations as well as control and switching examples of the invention.

### List of Reference Numerals

- 1: multi-level multi-phase converter
- 2: transformer
- 3: primary side
- 4: secondary side
- 5: primary side circuit
- 6: primary switch leg
- 6.1: primary half-bridge
- 6.2: primary half-bridge
- 7: secondary side circuit
- 8: secondary rectifier leg
- 8.1: secondary half-bridge
- 8.2: secondary half-bridge
- 9: secondary rectifier element, secondary rectifier switch, secondary rectifier diode
- 10: first connection point
- 11: second connection point
- 12: phase
- 13: resonant tank
- 14: star point
- 15: input capacitor
- 16: output capacitor
- 17: secondary resonant capacitors
- 18: third connection point
- 19: fourth connection point
- 20: flying capacitor
- 21: middle-point of secondary half-bridge
- 22: PFC module
- 23: AC grid
- 24: switching signals
- 25: PFC control module
- 27: primary switch
- 28: abscissa
- 29: ordinate
- S1 - S8: step

## Claims

1. Multi-level multi-phase converter (1), comprising:
• a transformer (2) with a plurality N of phases (12);
• a primary side circuit (5) connected to a primary side (3) of the transformer (2), the primary side circuit (5) comprising a plurality of primary switch legs (6) with primary switches (27), wherein a number of primary switch legs (6) of the primary side circuit (5) corresponds to a number N of phases (12) of the transformer (2); and
• a secondary side circuit (7) connected to a secondary side (4) of the transformer (2), the secondary side circuit (7) comprising a plurality of secondary rectifier legs (8) with secondary rectifier elements (9), wherein the secondary rectifier legs (8) are connected in parallel to one another; wherein
• each of the primary switch legs (6) comprises a plurality of stacked primary half-bridges (6.1, 6.2) connected in series with one another;
• the primary switch legs (6) are connected in parallel to one another; and wherein
• one phase (12) of the primary side (3) of the transformer (2) is connected between two primary half-bridges (6.1, 6.2) in series with one another.

2. Multi-level multi-phase converter (1) according to claim 1, wherein each of the primary switch legs (6) comprises exactly two stacked primary half-bridges (6.1, 6.2) connected in series with one another.

3. Multi-level multi-phase converter (1) according to any one of the foregoing claims, wherein one phase (12) of the primary side (3) of the transformer (2) is connected, especially in series, between a first connection point (10) to a first primary half-bridge (6.1) and a second connection point (11) to a second primary half-bridge (6.2) different from the first primary half-bridge (6.1) of a single primary switch leg (6) of the primary side circuit (5), respectively, and wherein preferably each phase (12) of the primary side (3) of the transformer (2) is connected to first and second connection points (10, 11) of one respective primary switch leg (6).

4. Multi-level multi-phase converter (1) according to any one of the foregoing claims, wherein each primary half-bridge (6.1, 6.2) of each primary switch leg (6) comprises two primary switches (27).

5. Multi-level multi-phase converter (1) according to any one of the foregoing claims, wherein the secondary side circuit (7) is connected to a star-connected secondary winding of the secondary side (4) of the transformer (2).

6. Multi-level multi-phase converter (1) according to any one of claims 1 to 4, wherein the secondary side circuit (7) is connected to a delta-connected secondary winding of the secondary side (4) of the transformer (2).

7. Multi-level multi-phase converter (1) according to claim 6, wherein the secondary side circuit (7) comprises secondary resonant capacitors (17) in delta connection to the secondary side (4) of the transformer (2).

8. Multi-level multi-phase converter (1) according to any one of the foregoing claims, wherein each of the secondary rectifier legs (8) comprises a plurality of stacked secondary half-bridges (8.1, 8.2) connected in series with one another.

9. Multi-level multi-phase converter (1) according to claim 8, wherein each of the secondary rectifier legs (8) comprises exactly two stacked secondary half-bridges (8.1, 8.2) connected in series with one another.

10. Multi-level multi-phase converter (1) according to claim 8 or claim 9, wherein the secondary side (4) of the transformer (2) is connected, especially in series, between a third connection point (18) to a first secondary half-bridge (8.1) and a fourth connection point (19) to a second secondary half-bridge (8.2) different from the first secondary half-bridge (8.1).

11. Multi-level multi-phase converter (1) according to claim 10, wherein each phase (12) of the secondary side (4) of the transformer (2) is connected between said third and fourth connection points (18, 19) to the first secondary half-bridge (8.1) and to the second secondary half-bridge (8.2) of a single secondary rectifier leg (8) of the secondary side circuit (7).

12. Multi-level multi-phase converter (1) according to any one of the foregoing claims, wherein the secondary side circuit (7) comprises a flying capacitor (20), especially one for each secondary rectifier leg (8), connected between middle-points (21) of different stacked secondary half-bridges (8.1, 8.2).

13. Multi-level multi-phase converter (1) according to claim 12, wherein each flying capacitor (20) is connected between a first middle-point (21) between two rectifier elements (9) of a first secondary half-bridge (8.1) and a second middle-point (21) between two rectifier elements (9) of a second secondary half-bridge (8.2) different from the first secondary half-bridge (8.1).

14. Control method for operating a multi-level multi-phase converter (1) according to any one of the foregoing claims, comprising:
a first step (S1) of determining voltage (Vout) and current output by the multi-phase converter (1) during operation;
a second step (S2) of determining a load requirement value of voltage and/or current required by a load connected to the multi-phase converter (1);
a third step (S3) of calculating a required frequency value fₒₚ based on the load requirement;
a fourth step (S4) of determining a maximum frequency value fₘₐₓ of the multi-phase converter (1);
a fifth step (S5) of comparing the required frequency value fₒₚ with the maximum frequency value fₘₐₓ; and:
if fₒₚ is equal to or less than fₘₐₓ: carrying out a frequency-modulation-mode with switching pulses of primary switches (27) between different primary switch legs (6) being shifted by 360°/N in a sixth step (S6);
if fₒₚ is greater than fₘₐₓ: carrying out a phase-modulation-mode with switching pulses of high-side switches (27) and low-side switches (27) of different stacked primary half-bridges (6.1, 6.2) connected in series with one another being phase-shifted in a seventh step (S7), preferably while maintaining a phase shift of 360°/N between generated voltages of different primary switch legs.

15. Control method according to claim 14, further comprising:
an eighth step (S8), during frequency-modulation-mode and/or during phase-modulation-mode, of sensing a voltage (V_{dc1}, V_{dc2}) of at least one input side capacitor (15) of the primary side circuit (15) of the converter (1) and, if the at least one of the sensed voltages (V_{dc1}, V_{dc2}) is not equal to half of a total input voltage (Vin), introducing a secondary phase shift between switching pulses of high-side switches (27) and low-side switches (27) of different primary half-bridges (6.1, 6.2) connected in series with one another, preferably while maintaining a phase shift of 360°/N between generated voltages of different primary switch legs.
